# EUROPEAN PATENT APPLICATION

(11) **EP 4 614 469 A1**
(43) Date of publication of application: **10.09.2025**
(21) Application number: 25157585.8
(22) Date of filing: 13.02.2025
(51) Int. Cl.: G07C 9/00, G07C 9/20, G07C 9/27

(54) **ENROLLMENT OF A PUBLIC KEY FOR USE AS A PHYSICAL OR LOGICAL CREDENTIAL**

(30) Priority: 16.02.2024 US 202418444224
(71) Applicant: Tyco Fire & Security GmbH, 8212 Neuhausen am Rheinfall (CH)
(72) Inventor: OUELLETTE, Jason M., 8212 Neuhausen am Rheinfall (CH); HOLTON, Glenn Kilburn, 8212 Neuhausen am Rheinfall (CH)
(74) Representative: Meissner Bolte Nürnberg

(57) **Abstract**

Example aspects include techniques for enrollment of a public key for use as a physical or logical credential. These techniques may include receiving, at a first PKAAC access control reader with enrollment capabilities, a PKAAC authentication request from a PKAAC-enabled client application of a client device, and determining that the PKAAC authentication request corresponds to an identity that is unenrolled. In addition, the techniques may include collecting pre-enrollment information in response to the PKAAC authentication request corresponding to the identity that is unenrolled, and generating enrollment information based upon the pre-enrollment information, the enrollment information including authorization information indicating that the identity is authorized to access an access point. Further, the techniques may include providing, via a second PKAAC access control reader, access to the access point based on the authorization information.

## Description

Access control systems can be used to selectively enable users to pass through specific locations in a building or access digital resources. For example, access control systems may include card readers, cameras, or other systems that receive input information and determine whether to provide access by opening doors, gates, or other impediments. While typical access control systems provide a level of automation and security via access control credentials, access control credentials are typically proprietary formats that create interoperability issues. For example, a user may need multiple access control credentials for different buildings, building locations, and/or digital resources, which can be cumbersome and limit adoption. Accordingly, improvements in access control systems are desired.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In some aspects, the techniques described herein relate to a method including: receiving, at a first public key as a credential (PKAAC) access control reader with enrollment capabilities, a PKAAC authentication request from a PKAAC-enabled client application of a client device; determining that the PKAAC authentication request corresponds to an identity that is unenrolled; collecting pre-enrollment information in response to the PKAAC authentication request corresponding to the identity that is unenrolled; generating enrollment information based upon the pre-enrollment information; the enrollment information including authorization information indicating that the identity is authorized to access an access point; and providing, via a second PKAAC access control reader, access to the access point based on the authorization information.

The present disclosure includes a system having devices, components, and modules corresponding to the steps of the described methods, and a computer-readable medium (e.g., a non-transitory computer-readable medium) having instructions executable by a processor to perform the described methods.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram a system for enrollment of a public key for use as a physical or logical credential, according to some implementations.
FIG. 2 is a flow diagram of an example of a method of enrollment of a public key for use as a physical or logical credential, according to some implementations.
FIG. 3 is a flow diagram of another example of a method of enrollment of a public key for use as a physical or logical credential, according to some implementations.
FIG. 4 is block diagram of an example of a computer device configured to implement a system for enrollment of a public key for use as a physical or logical credential, according to some implementations.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Implementations of the present disclosure provide enrollment of a public key as a credential (PKAAC) for use as a physical or logical credential. As discussed herein, typical access control systems rely on proprietary implementations. Using proprietary security systems often require users to have multiple access credentials for different resources, such as separate badges for a front door, elevator, and computer device, can lead to several disadvantages. One of the main drawbacks is the inconvenience for users who need to carry multiple access credentials, making use cumbersome and increasing the likelihood of misplacing an access credential.

Additionally, the administrative burden is increased due to enrollment processes that can be time-consuming and labor-intensive. For example, proprietary systems often require issuance, configuration, and enrollment of an access credential This results in higher administrative costs and reduced efficiency. The costs associated with implementing and maintaining multiple proprietary security systems can also be higher compared to using a unified, integrated solution. This includes expenses related to purchasing, installing, and maintaining separate systems, as well as issuing multiple credentials to users. Further, proprietary security systems also suffer from limited interoperability. These systems may not be compatible with each other, which can make it difficult to integrate and streamline access control across different resources, leading to inefficiencies and a disjointed user experience. This disjointed experience can also increase the risk of security breaches, as users may be more likely to lose or misplace their access cards or badges, resulting in unauthorized access to secured areas or resources.

Proprietary security systems may also lack flexibility compared to open, standards-based solutions. This can make it challenging to update or expand the system as an organization's needs change over time. Vendor lock-in is another concern when relying on proprietary systems, as organizations become dependent on specific vendors for their access control needs, which can limit their ability to switch vendors or adopt new technologies. This dependence can lead to higher costs and reduced innovation. Additionally, users may be resistant to properly using multiple access credentials, particularly if they perceive the system to be inconvenient or cumbersome. This resistance can lead to decreased compliance with security protocols and an increased risk of security breaches.

PKAAC (e.g., the public key open credential (PKOC) specification, the Aliro standard by the Connectivity Standards Alliance (CSA), etc.) employs the principles of Public Key Infrastructure (PKI) without necessitating the typically intricate and costly identity infrastructure associated with traditional PKI systems. PKAAC allows the device itself to generate the PKI key pair, facilitating the private-public key handshake for credential authentication. A significant advantage of PKAAC lies in the fact that the private key remains securely stored on the device, while the public key serves as the "badge number," which can be effortlessly shared with any system or device responsible for access control. With PKAAC, the user possesses full ownership of the encryption keys, eliminating the need for complex key management or sharing processes. Further, PKAAC creates a common rule set for access control system operators without the complication of formats and workarounds for running out of unique numbers, thereby creating a truly interoperable credential. Moreover, PKAAC supports a "Bring Your Own Credential" (BYOC) approach, further enhancing its versatility and user-friendliness. However, PKAAC adoption will be limited until secure and user-friendly techniques are implemented for enrollment.

Accordingly, the present disclosure describes access control systems for providing a secure, efficient, and user-friendly PKAAC enrollment. In an aspect, the access control systems of the present disclosure can determine whether an identity is enrolled based on a PKAAC received at an access control reader, collect information from an enrollee corresponding to an unenrolled identity, enroll the identity at the access control reader based on the collected information, and provide access to secured resources within the access control system based on the PKAAC and the collected information. As such, the present disclosure provides systems and methods that dynamically enroll PKAAC credentials generated by a user device, which provides interoperability, efficiency, ease-of use, improved security, and user-friendliness.

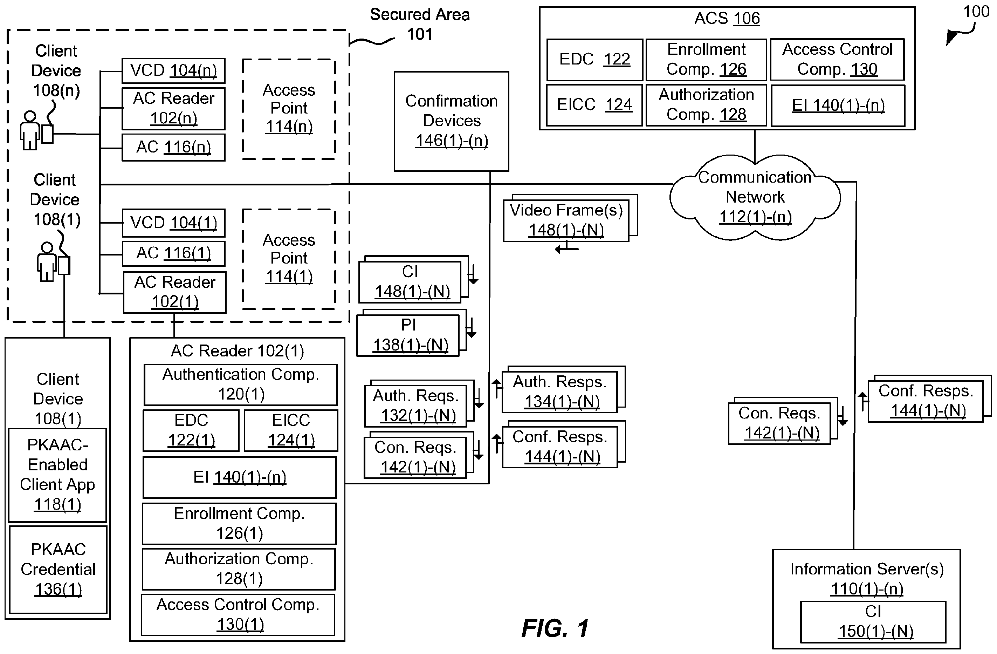

Referring to FIG. 1, in one non-limiting aspect, an access control system 100 is configured to provide selective access to, restriction of, and/or notification of access to locations within a secured area 101 or other resources within the secured area 101. Some examples of resources include electronic devices and electronic documents. As illustrated in FIG. 1, the access control system 100 may include one or more access control readers 102(1)-(n), a plurality of video capture devices 104(1)-(n), an access control server (ACS) 106, one or more client devices 108(1)-(n), one or more information servers 110(1)-(n), and/or one or more communication networks 112(1)-(n). Some examples of the management devices 1 10(1)-(n) include smartphones, computing devices, wearable devices. Internet of Things (IoT) devices, video game systems, robots, process automation equipment, control devices, vehicles, transportation equipment, and virtual and augmented reality (VR and AR) devices. In some implementations, a communication network 112 may include a plain old telephone system (POTS), a radio network, a cellular network, an electrical power line communication system, one or more of a wired and/or wireless private network, personal area network, local area network, wide area network, and/or the Internet. Further, in some aspects, the one or more access control readers 102(1)-(n), the plurality of video capture devices 104(1)-(n), the access control server 106, the one or more client devices 108(1)-(n), and/or the one or more information servers 110(1)-(n) may be configured to communicate via the communication networks 112(1)-(n).

As illustrated in FIG. 1, in some aspects, the access control readers 102(1)-(n) are installed near access points 114(1)-(n), such as doors, hallways, elevators, or electronic devices. For example, a first access control reader 102(1) may be installed near a first access point 114(1), a nth access control reader 102(n) may be installed near a nth access point 114(n), and so forth. Further, the access control readers 102(1)-(n) are configured to perform an authentication process and/or authorization process, and provide access to a location or resource based on the results of the authentication process and the authorization process. In some aspects, the access control readers 102(1)-(n) receive authentication credentials from a client device 108, determine whether to the authentication credentials are valid within the access control system 100, determine the authorization rights of an identity associated with the authentication credentials, and determine whether to provide access to a location or resource based on the authorization rights. For example, if the access control reader 102(1) verifies authentication credentials received at the access point 114(1), the access control reader 102 may instruct an access controller 116 to unlock a door or not generate an alarm at the access point 114(1) based on the authorization rights of the identity associated with the authentication credentials indicating that the identity is permitted to access to the access point 114(1).

As used herein, PKAAC is a protocol that permits secure authentication of an individual using public keys which may not be issued by a centralized authority. Further, as described in detail herein, the access control readers 102(1)-(n) may be PKAAC-enabled access control readers that perform PKAAC authentication processes with PKAAC-enabled client application 1 18(1)-(n) on the client devices 108(1)-(n). For example, the access control reader 102 may send a nonce (e.g., a one-time random number) to the client device 108. Further, the access control reader 102 may receive, from the client device 108, a public key and a digital signature generated by the client device 108 using the nonce and a private key corresponding the public key. In addition, the access control reader 102(1) may employ the public key to decrypt the digital signature to obtain the random number, which confirms successful authentication of the client device 108. Additionally, the access control reader 102 may determine whether to provide access to an access point 114 co-located with the access control reader 102 based on the authorization rights of an identity associated with the authenticated client device 108.

In some aspects, an access control reader 102 may have enrollment capabilities and perform an enrollment process with PKAAC identities unknown to the access control system 100. As illustrated in FIG. 1, an access control reader 102 may include an authentication component 120, an enrollment detection component (EDC) 122, an enrollment information collection component 124, an enrollment component 126, an authorization component 128, and an access control component 130.

In some aspects, the authentication component 120 performs PKAAC authentication processes with the client devices 108(1)-(n). For example, the authentication component 120 may receive authentication requests 132(1)-(n) from the client devices 108(1)-(n) and generate authentication responses 134(1)-(n) based on the PKAAC authentication credentials 136(1)-(n) received from the client devices 108(1)-(n).

In some aspects, the enrollment detection component 122 determines if a PKAAC included in an authentication request 132 has been previously enrolled within the access control system 100. For example, in some aspects, the enrollment detection component 122 of a first access control reader 102 may determine whether the PKAAC has been previously enrolled with the access control server 106 or the access control readers 102(1)-(n). In some aspects, the enrollment detection component 122 determines whether a public key of the PKAAC authentication credential 136 received from the client device 108 or a representation of the public key of the PKAAC authentication credential 136 received from the client device 108 is present within pre-existing enrollment information locally stored within the access control reader 102 and/or enrollment information remotely stored within the access control server 106. If the enrollment detection component 122 determines that a PKAAC corresponding to an authentication request 132 has not been previously enrolled within the access control system 100, the access control reader 102 may perform an enrollment process if the access control reader 102 has enrollment capabilities.

In some aspects, the enrollment information collection component (EICC) 124 may collect pre-enrollment information (PI) 138(1)-(n) during the enrollment process. Further, in some aspects, the enrollment information collection component 124 may collect the pre-enrollment information 138 via a GUI presented on the client application device (e.g., a PKAAC-enabled client application 118(1) or a web browser) of the client device 108. In addition, the pre-enrollment information 138(1)-(n) may be used to determine enrollment information (EI) 140 used to authenticate a user and authorize user access post-enrollment.

In some aspects, the enrollment information collection component 124 may collect identification information identifying an enrollee associated with the client device 108, location information identifying one or more expected destinations of the enrollee associated with the client device 108, an intended purpose of a visit of the enrollee associated with the client device 108, and/or host information identifying one or more hosts for the enrollee associated with the client device 108. Further, the enrollment information collection component 124 may confirm the pre-enrollment information 138(1)-(n) collected during the enrollment process. For example, the enrollment information collection component 124 may confirm identification information, location information, intended purpose information, and/or host information provided by an enrollee. In some aspects, the enrollment information collection component 124 may send confirmation requests 142(1)-(n) to security personnel devices associated with the intended purpose and/or expected destinations of the enrollee, and receive confirmation responses 144(1)-(n) from confirmation devices 146(1)-(n). For example, if the pre-enrollment information 138(1)-(n) indicates that the enrollee intends to visit a cafeteria and/or is visiting the secured area 101 for food consumption, the enrollment information collection component 124 may send a confirmation request 142 to one or more confirmation devices 146 associated with personnel responsible for approving or denying access to the cafeteria. Additionally, or alternatively, if the pre-enrollment information 138 indicates that the enrollee is visiting a person located within the building, the enrollment information collection component 124 may confirm that the person is permitted to have guests, and/or send confirmation requests 142(1)-(n) to confirmation devices 146(1)-(n) to confirm that one or more hosts approve of granting the enrollee access to secured area 101. Additionally, in some aspects, the enrollment information collection component 124 may facilitate a communication session (e.g., voice call, text message conversation, video call, etc.) that provides an opportunity for the enrollee to converse with management personnel and/or host associated with the pre-enrollment information 138(1)-(n) prior to transmitting a confirmation request to a confirmation device. For example, the enrollment information collection component 124 may initiate a communication session between the enrollee and a confirmation device 146. In some aspects, the enrollment information collection component 124 may initiate a communication session between the client device 108 (e.g., PKAAC-enabled client application 118) and a confirmation device 146. In some other aspects, the enrollment information collection component 124 may initiate a communication session between a video capture device 104, in proximity to the access control reader 102, and a confirmation device 146. For example, a video capture device 104 in proximity or incorporated into to the access control reader 102 may capture one or more video frames 148(1)-(n). Further, the access control reader 102 and/or the video capture device 104 may transmit the video frames 148(1)-(n) for presentation with a confirmation request 142. Additionally, the audio-visual information may be used to confirm the pre-enrollment information 138. For example, a host may determine whether to confirm that an enrollee is an expected or approved visitor based upon viewing the one or more video frames 148 with a confirmation request 142 transmitted to a confirmation device 146. As another example, security personnel may conduct an interview via the one or more video frames 148 with a confirmation request 142 to determine whether to provide a confirmation response 144 in the affirmative.

In some aspects, the enrollment information collection component 124 may confirm the pre-enrollment information 138(1)-(n) using confirmation information 150(1)-(n) stored on the information servers 110(1)-(n). For example, the confirmation information 150(1) may be a calendar that indicates scheduled visitors, scheduled hosts, scheduled dates and locations for events (e.g., meetings) within the secured area 101. Further, the enrollment information collection component 124 may verify the at least one of the identification information, location information, intended purpose, and/or host information provided by an enrollee to the enrollment information collection component 124 based on calendar information. For example, the enrollment information collection component 124 may determine whether a host and event location identified within the pre-enrollment information 138 by an enrollee matches a host and event location with the confirmation information 150(1). As another example, the confirmation information 150(2) may be a social network that indicates a relationship between an enrollee and a host. Further, the enrollment information collection component 124 may determine whether a host identified by the enrollee within the pre-enrollment information 138 has a relationship to the host based on social network. As another example, the confirmation information 150(2) may be an electronic image catalog and the identity information of pre-enrollment information 138 may identify a particular person by name or biometrically. Further, the enrollment information collection component 124 may determine whether a photograph of the particular person within the electronic image catalog matches an image of the enrollee captured by a video capture device 104 in proximity to access control reader 102.

In some aspects, the enrollment information collection component 124 may perform an additional authentication factor to generate pre-enrollment information 138. For example, the identity information of the pre-enrollment information 138 may include a name and picture of the enrollee. In response, the enrollment information collection component 124 may instruct the enrollee to display an identification card and cause the video capture device 104 to capture an image of the identification card. Further, the enrollment information collection component 124 may determine whether the identification card is valid and matches the person identified by the identity information of the pre-enrollment information 138.

In some aspects, the enrollment information collection component 124 may perform an additional authentication factor based upon the identification information, the location information, the intended purpose, and/or the host information of the pre-enrollment information 138. For example, the enrollment information collection component 124 may perform an additional authentication factor in response to the incompleteness of the pre-enrollment information 138, a security level of the location information, the intended purpose information, and/or the host information of the pre-enrollment information 138

In some aspects, the enrollment component 126 may generate enrollment information 140(1)-(n) based upon the pre-enrollment information 138(1)-(n). For example, the enrollment component 126 may generate enrollment information indicating one or more access points 114 that the enrollee is authorized to access based on the pre-enrollment information identifying the one or more access points 114, one or more locations associated with the one or more access points, and/or an intended use associated with the one or more access points 114. As another example, the enrollment component 126 may generate enrollment information 140 indicating one or more access points that the enrollee is authorized to access based on receiving a confirmation response 144 from management personnel or a host associated with the one or more access points 114. As another example, the enrollment component 126 may generate enrollment information 140 indicating one or more access points 114 that the enrollee is authorized to access based on the calendar information matching the location information, the intended purpose, and/or the host information of the pre-enrollment information 138(1)-(n), and the one or more access points 114 being associated with the location information, the intended purpose, and/or the host information of the pre-enrollment information 138(1)-(n). As yet still another example, the enrollment component 126 may generate enrollment information 140 indicating one or more access points 114 that the enrollee is authorized to access based on the enrollee successfully performing an additional authentication factor and the one or more access points 114 being associated with the pre-enrollment information 138(1)-(n) (e.g., the pre-enrollment information 138(1)-(n) identifying a location associated with the one or more access points as a location of an office of the enrollee).

In some aspects, the enrollment component 126 may transmit the enrollment information to the access control server 106. Further, the access control server 106 may transmit the enrollment information 140 to other access control readers 102. For example, the enrollment detection component 122 of the other access control device 102(2)-(n) may query the access control server 106 for the enrollment information 140(1 )-(n) generated by the access control device 102(1).

The authorization component 128 may be configured to determine which access points a verified PKAAC is able to access, and instruct an access point to provide access via the access control component 130. For example, the access control component 130 may transmit an access instruction to an access controller 116 associated with an access point 114 that causes the access controller 116 to unlock a door at the access point.

As illustrated in FIG. 1, a client device may include a PKAAC-enabled client application 118(1). In some aspects, the PKAAC-enabled client application 118 may generate the credential 136 (e.g., an asymmetric key pair) for the client device 108(1) and store the PKAAC authentication credential 136 in a secure element of the client device 108(1). Further, the PKAAC-enabled client application 118 may employ the credential 136 to authenticate to an access control reader 102. In some aspects, the PKAAC-enabled client application 118 may locally authenticate a user of the client device 108(1) before facilitating authentication to the access control reader 102. Additionally, the PKAAC-enabled client application 118 may be employed by the enrollment information collection component 124 to obtain the pre-enrollment information 138 from an enrollee. For instance, the PKAAC-enabled client application 118 may be used to present a GUI for collecting pre-enrollment information 138 from an enrollee. For example, the PKAAC-enabled client application 118 may present a GUI wizard that prompts the enrollee for identification information, location information, intended purpose information, and/or host information. In some aspects, the identity information may include a name, a role or position of the enrollee, an employer or affiliation of the enrollee, a level of education of the enrollee, an address associated with the enrollee, contact information of the enrollee, or biometric information.

As illustrated in FIG. 1, in some aspects, the access control server 106 may also include the enrollment detection component 122, the enrollment information collection component 124, the enrollment component 126, the authorization component 128, and/or the access control component 130. Further, at least one of the enrollment detection component 122, the enrollment information collection component 124, the enrollment component 126, the authorization component 128, and/or the access control component 130 may assist an enrollment process performed by an access control reader 102 having enrollment capabilities.

For example, in some aspects, the enrollment detection component 122 of the access control server 106 may determine that an identity is unenrolled. In some examples, the access control server 106 may receive a request from a first person associated with an enrolled identity for approval of physical access by a second person associated with the unenrolled identity. In some examples, the access control server 106 may provide a website or application for enrollment, and receive a request from an unenrolled identity via the website or application. In some other examples, the access control server 106 may detect a reference to the identity within a scheduled appointment or invitation having the secured area 101 identified as the location. Further, the enrollment information collection component 124 of the access control server 106 may collect pre-enrollment information 138(1)-(n) in response to identifying that the identity is unenrolled. In some examples, the enrollment information collection component 124 may request the pre-enrollment information 138(1)-(n) from the enrollee via a GUI presented by the PKAAC-enabled client application 118, and receive the pre-enrollment information 138(1)-(n) from the PKAAC-enabled client application 118. In some other examples, the access control server 106 may provide a website or application for enrollment, and receive the pre-enrollment information 138(1)-(n) via the website or application. In some other examples, the access control server 106 may send an electronic communication (e.g., an email) requesting the pre-enrollment information 138(1)-(n) and receive the pre-enrollment information 138(1)-(n) within a reply to the electronic communication or via a website identified within the electronic communication. In addition, the enrollment component 126 of the access control server 106 may generate enrollment information 140 based upon the pre-enrollment information 138(1)-(n). Additionally, the access control server 106 may transmit the enrollment information 140 to the access control readers 102 for providing access to a credential corresponding to the identity.

As another example, in some aspects, the access control reader 102 may receive the PKAAC credential 136 from the PKAAC-enabled client application 118, and transmit the PKAAC credential 136 to the enrollment detection component 122 of the access control server 106. In response, the enrollment detection component 122 of the access control server 106 may determine that the PKAAC credential 136 corresponds to an unregistered identity, an instruct the access control reader 102 having enrollment capabilities to enroll the unregistered identity.

As another example, in some aspects, the enrollment information collection component 124 of the access control server 106 may collect the pre-enrollment information 138. For example, in response to initiation of the enrollment process by an access control reader 102, the enrollment information collection component 124 of the access control server 106 may request the pre-enrollment information 138 from the PKAAC-enabled client application 118 and receive the pre-enrollment information 138 from the PKAAC-enabled client application 118 (e.g., via a GUI presented within the PKAAC-enabled client application 118 to the enrollee).

As another example, in response to initiation of the enrollment process by an access control reader 102, the enrollment information collection component 124 of the access control server 106 may verify the pre-enrollment information 138(1)-(n) collected by access control reader 102 or the access control server 106. For instance, the enrollment information collection component 124 of the access control server 106 may verify the pre-enrollment information 138(1)-(n) by comparing the pre-enrollment information 138(1)-(n) to confirmation information 150(1)-(n) stored on the information servers 110(1)-(n). Further, in response to verification of the pre-enrollment information 138(1)-(n), the enrollment information collection component 124 of the access control server 106 may instruct the access control reader 102 that has initiated the enrollment process for an unregistered identity to register the identity.

As another example, the enrollment component 126 of the access control server 106 may generate enrollment information 140(1)-(n) based upon pre-enrollment information 138(1)-(n) received from the access control reader 102, the PKAAC-enabled client application 118, and/or a website/application provided by the access control server 106. For instance, the enrollment component 126 of the access control server 106 may generate enrollment information 140 indicating one or more access points 114 that the enrollee is authorized to access based on the pre-enrollment information 138 identifying the one or more access points 114, one or more locations associated with the one or more access points, and/or an intended use associated with the one or more access points 114. In some other instances, the enrollment component 126 of the access control server 106 may generate enrollment information 140 indicating one or more access points that the enrollee is authorized to access based on receiving a confirmation response 144 from management personnel or a host associated with the one or more access points 114. In some other instances, the enrollment component 126 of the access control server 106 may generate enrollment information 140 indicating one or more access points 114 that the enrollee is authorized to access based on the calendar information matching the location information, the intended purpose, and/or the host information of the pre-enrollment information 138(1)-(n), and the one or more access points 114 being associated with the location information, the intended purpose, and/or the host information of the pre-enrollment information 138(1)-(n). Additionally, in some aspects, the enrollment information 140 may further include expiration information identifying a validity period of the enrollment information 140. In some other instances, the enrollment component 126 of the access control server 106 may generate enrollment information 140 indicating one or more access points 114 that the enrollee is authorized to access based on the enrollee successfully performing an additional authentication factor and the one or more access points 114 being associated with the pre-enrollment information 138(1)-(n) (e.g., the pre-enrollment information 138(1)-(n) identifying a location associated with the one or more access points as a location of an office of the enrollee). Further, the access control server 106 may transmit the enrollment information 140 to access control readers 102(1)-(n).

In some examples, the information sources 110 may include search engines, large language models, government databases, credit bureaus, utility providers, telecommunication companies, financial institutions, educational institutions, online databases and social media platforms, electronic identity (eID) systems. Further, the information sources 110 may receive confirmation requests 142(1)-(n) for pre-enrollment information 138 provided by an enrollee, and transmit conformation responses 144(1)-(n) corresponding to the confirmation requests 142(1)-(n). For example, the information source 110 may receive a confirmation request 142 for a photograph of the enrollee, and transmit a confirmation response 144 including an image of the enrollee. Further, upon receipt of the image, the access control reader 102 may compare the image received from the information source 110 to an image captured by the client device or a video capture device during the enrollment process.

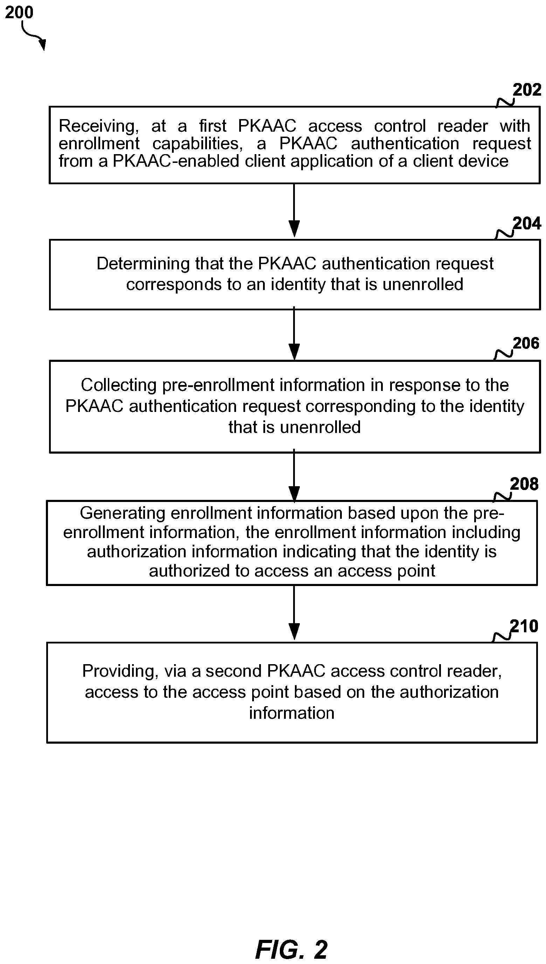

Referring to FIG. 2, in operation, the access control system 100 or computing device 400 may perform an example method 200 for providing natural language search over security videos. The method 200 may be performed by one or more components of the access control system 100, the computing device 400, or any device/component described herein according to the techniques described with reference to FIGS. 1-2.

At block 202, the method 200 includes receiving, at a first PKAAC access control reader with enrollment capabilities, a PKAAC authentication request from a PKAAC-enabled client application of a client device. For example, an access control reader 102(1) having enrollment capabilities may receive a PKAAC authentication credential 136 from a PKAAC-enabled client application 118. In some aspects, the PKAAC authentication credential 136 includes a globally unique representation of a public key of a PKI pair (e.g., a subset of the public key), Accordingly, the access control reader 102, the computing device 400, and/or the processor 402 executing the authentication component 120 may provide means for receiving, at a first PKAAC access control reader with enrollment capabilities, a PKAAC authentication request from a PKAAC-enabled client application of a client device.

At block 204, the method 200 includes determining that the PKAAC authentication request corresponds to an identity that is unenrolled. For example, the enrollment detection component 122 of an access control reader 102 or an access control server 106 may determine that PKAAC authentication credential 136 corresponds to an identity that has not been registered within the access control system 100. In some aspects, the enrollment detection component 122 determines that the identity is unenrolled based upon the PKAAC authentication credential 136 not having matching information within the enrollment information 140(1)-(n) of the access control reader 102 or the access control server 106. Further, the enrollment detection component 122 may initiate an enrollment process at the access control reader 102 in response to the enrollment detection component 122 determining that the identity that has not been registered within the access control system 100. Accordingly, the access control reader 102, the access control server 106, the computing device 400, and/or the processor 402 executing the enrollment detection component 122 may provide means for determining that the PKAAC authentication request corresponds to an identity that is unenrolled.

At block 206, the method 200 includes collecting pre-enrollment information in response to the PKAAC authentication request corresponding to the identity that is unenrolled. For example, in response to the access control reader 102 initiating an enrollment process, the enrollment information collection component 124 of the access control reader 102 and/or the access control server 106 may collect pre-enrollment information 13 8(1)-(n) from the enrollee. In some aspects, the enrollment information collection component 124 may request the pre-enrollment information 138(1)-(n) from the enrollee via a GUI presented by the PKAAC-enabled client application 118, and receive the pre-enrollment information 138(1)-(n) from the PKAAC-enabled client application 118. Accordingly, the access control reader 102, the access control server 106, the computing device 400, and/or the processor 402 executing the enrollment information collection component 124 may provide means for collecting pre-enrollment information in response to the PKAAC authentication request corresponding to the identity that is unenrolled.

At block 208, the method 200 includes generating enrollment information based upon the pre-enrollment information, the enrollment information including authorization information indicating that the identity is authorized to access an access point. For example, the enrollment component 126 of the access control reader 102 and/or the access control server 106 may generate the enrollment information 140 based on the pre-enrollment information 138. In some aspects, the enrollment component 126 generates the enrollment information 140 in response to one or more confirmation responses 154 received from a host and/or a management personnel. In some other aspects, the enrollment component 126 generates the enrollment information 140 in response to verifying pre-enrollment information 138 collected from the enrollee using confirmation information 150 retrieved from an information source 110. Further, in some aspects, the enrollment information 140 memorializes the registration the identity of the enrollee within the access control system 100 and identifies access points 114 within the access control system 100 that the identity is permitted to access. Accordingly, the access control reader 102, the access control server 106, the computing device 400, and/or the processor 402 executing the enrollment component 126 may provide means for generating enrollment information based upon the pre-enrollment information, the enrollment information including authorization information indicating that the identity is authorized to access an access point.

At block 210, the method 200 includes providing, via a second PKAAC access control reader, access to the access point based on the authorization information. For example, the enrollment information 140 may be stored locally within the access control reader 102(1) and distributed to other access control readers 102(2)-(n) (e.g., the access control server 106 may receive or generate the enrollment information 140 and transmit the enrollment information to the other access control readers 102). Further, an access control reader 102 that has received the enrollment information 140 may receive the PKAAC authentication credential 136 from the PKAAC-enabled client application 118, perform a PKAAC authentication process with the PKAAC-enabled client application 118, and provide access at an access point corresponding the access control reader 102 based upon the enrollment information 140 indicating that the identity associated with the PKAAC authentication credential 136 is permitted to access the access point. In some aspects, the access control reader 102 may be the same access control reader 102(1) that enrolled the identity or one of the other access control readers 102(2)-(n) (e.g., an access control reader 102 that does not have enrollment capabilities). Accordingly, the access control system 100, the computing device 400, and/or the processor 402 executing the authorization component 128 or access control component 130 may provide means for providing, via a second PKAAC access control reader, access to the access point based on the authorization information.

In some other examples, an access control reader 102 may receive a portion of the enrollment information 140 that indicates that the identity of the enrollee is registered. Further, an access control reader 102 that has received the enrollment information 140 may receive the PKAAC authentication credential 136 from the PKAAC-enabled client application 118, perform a PKAAC authentication process with the PKAAC-enabled client application 118, query the access control server 106 for authorization information (e.g., authorization to provide access to the identity at an access point 114 associated with the access control reader 102 or the enrollment information 140 identifying whether the identity is permitted to access the access point), and provide access based upon the authorization information received from the access control server.

Accordingly, the access control system 100, the computing device 400, and/or the processor 402 executing the authorization component 128 or access control component 130 may provide means for providing, via a second PKAAC access control reader, access to the access point based on the authorization information.

In some aspects, in the method 200, receiving the PKAAC authentication request includes receiving the authentication request including a PKAAC credential corresponding to a public key generated by the client device. Accordingly, the access control reader 102, the computing device 400, and/or the processor 402 executing the authentication component 120 may provide means for receiving the authentication request including a PKAAC credential corresponding to a public key generated by the client device.

In some aspects, in the method 200, the enrollment information is first enrollment information, and determining that the PKAAC authentication request corresponds to the identity that is unenrolled, includes comparing a PKAAC credential of the authentication request to second enrollment information generated before the first enrollment information. Accordingly, the access control reader 102, the access control server 106, the computing device 400, and/or the processor 402 executing the enrollment detection component 122 may provide means for determining that the PKAAC authentication request corresponds to the identity that is unenrolled, including comparing a PKAAC credential of the authentication request to second enrollment information generated before the first enrollment information.

In some aspects, in the method 200, collecting the pre-enrollment information includes: receiving the pre-enrollment information via the PKAAC-enabled client application of the client device. Accordingly, the access control reader 102, the access control server 106, the computing device 400, and/or the processor 402 executing the enrollment information collection component 124 may provide means for receiving the pre-enrollment information via the PKAAC-enabled client application of the client device.

In some aspects, in the method 200, generating enrollment information based upon the pre-enrollment information includes: transmitting a confirmation request to one or more confirmation devices associated with the pre-enrollment information; receiving, from the one or more confirmation devices, one or more confirmation responses confirming the pre-enrollment information; and generating the enrollment information based at least in part on the one or more confirmation responses confirming the pre-enrollment information. Accordingly, the access control reader 102, the access control server 106, the computing device 400, and/or the processor 402 executing the enrollment information collection component 124 and the enrollment component 126 may provide means for transmitting a confirmation request to one or more confirmation devices associated with the pre-enrollment information; receiving, from the one or more confirmation devices, one or more confirmation responses confirming the pre-enrollment information; and generating the enrollment information based at least in part on the one or more confirmation responses confirming the pre-enrollment information.

In some aspects, in the method 200 generating enrollment information based upon the pre-enrollment information includes: verifying the pre-enrollment information received from the client device; and generating the enrollment information based at least in part on the verifying. Accordingly, the access control reader 102, the access control server 106, the computing device 400, and/or the processor 402 executing the enrollment information collection component 124 and the enrollment component 126 may provide means for verifying the pre-enrollment information received from the client device; and generating the enrollment information based at least in part on the verifying.

In some aspects, in the method 200, the pre-enrollment information identifies at least one of a particular physical location associated with the access point, a host and/or event associated with the access point, and/or an intended use associated with the access point.

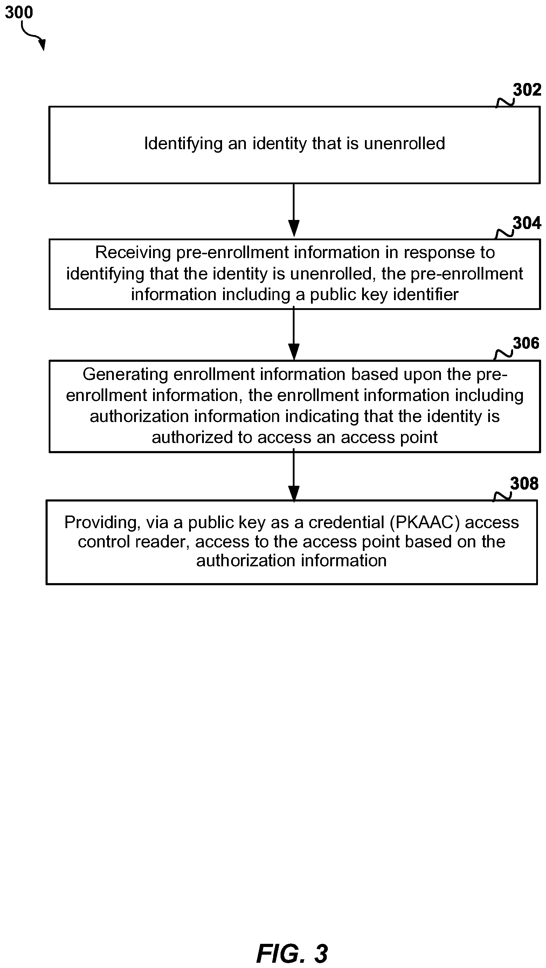

Referring to FIG. 3, in operation, the access control system 100 or computing device 400 may perform an example method 300 for enrollment of a public key for use as a physical or logical credential. The method 300 may be performed by one or more components of the access control system 100, the computing device 400, or any device/component described herein according to the techniques described with reference to FIGS. 1-2.

At block 302, the method 300 includes identifying an identity that is unenrolled. For example, an access control server 106 may determine that an identity is unenrolled. In some aspects, the access control server 106 may receive a request from an enrolled identity for approval of physical access by the person associated with the identity or another person associated with an enrolled identity. In some aspects, the access control server 106 may provide a website or application for enrollment, and receive a request from an unenrolled identity via the website or application. In some other aspects, the access control server 106 may detect a reference to the identity within a scheduled appointment or invitation having the secured area 101 identified as the location. Accordingly, the access control reader 102, the computing device 400, and/or the processor 402 executing the EDC 122 may provide means for identifying an identity that is unenrolled.

At block 304, the method 300 includes receiving pre-enrollment information in response to identifying that the identity is unenrolled, the pre-enrollment information including a public key identifier. For example, in response to identifying an identity that is unenrolled, the access control server 106 may collect pre-enrollment information 138(1)-(n) from the enrollee. In some aspects, the enrollment information collection component 124 may request the pre-enrollment information 138(1)-(n) from the enrollee via a GUI presented by the PKAAC-enabled client application 118, and receive the pre-enrollment information 138(1)-(n) from the PKAAC-enabled client application 118. In some other aspects, the access control server 106 may provide a website or application for enrollment, and receive the pre-enrollment information 138(1)-(n) via the website or application. In some other aspects, the access control server 106 may send an electronic communication requesting the pre-enrollment information 138(1)-(n) and receive the pre-enrollment information 138(1)-(n) within a reply to the electronic communication. Further, the pre-enrollment information 138(1)-(n) may include an identifier of the public key of the identity. In some aspects, the identifier may be the public key of a PKI pair or a representation of the public key of a PKI pair that may be used by the access control server 106 to identify the public key. Accordingly, the access control reader 102, the access control server 106, the computing device 400, and/or the processor 402 executing the enrollment information collection component 124 may provide means for receiving pre-enrollment information in response to identifying that the identity is unenrolled, the pre-enrollment information including a public key identifier.

At block 306, the method 300 includes generating enrollment information based upon the pre-enrollment information, the enrollment information including authorization information indicating that the identity is authorized to access an access point. For example, the enrollment component 126 of the access control reader 102 and/or the access control server 106 may generate the enrollment information 140 based on the pre-enrollment information 138. In some aspects, the enrollment component 126 generates the enrollment information 140 in response to one or more confirmation responses 154 received from a host and/or a management personnel. In some other aspects, the enrollment component 126 generates the enrollment information 140 in response to verifying pre-enrollment information 138 collected from the enrollee using confirmation information 150 retrieved from an information source 110. Further, in some aspects, the enrollment information 140 memorializes the registration the identity of the enrollee within the access control system 100 and identifies access points 114 within the access control system 100 that the identity is permitted to access. Accordingly, the access control reader 102, the access control server 106, the computing device 400, and/or the processor 402 executing the enrollment component 126 may provide means for generating enrollment information based upon the pre-enrollment information, the enrollment information including authorization information indicating that the identity is authorized to access an access point.

At block 308, the method 300 includes providing, via a public key as a credential (PKAAC) access control reader, access to the access point based on the authorization information. For example, the enrollment information 140 may be distributed to the access control readers 102(1)-(n) throughout the secured area 101. Further, an access control reader 102 that has received the enrollment information 140 may receive the PKAAC authentication credential 136 from the PKAAC-enabled client application 118, perform a PKAAC authentication process with the PKAAC-enabled client application 118, and provide access at an access point corresponding the access control reader 102 based upon the enrollment information 140 indicating that the identity associated with the PKAAC authentication credential 136 is permitted to access the access point. In some aspects, the access control reader 102 may be the same access control reader 102(1) that enrolled the identity or one of the other access control readers 102(2)-(n) (e.g., an access control reader 102 that does not have enrollment capabilities).

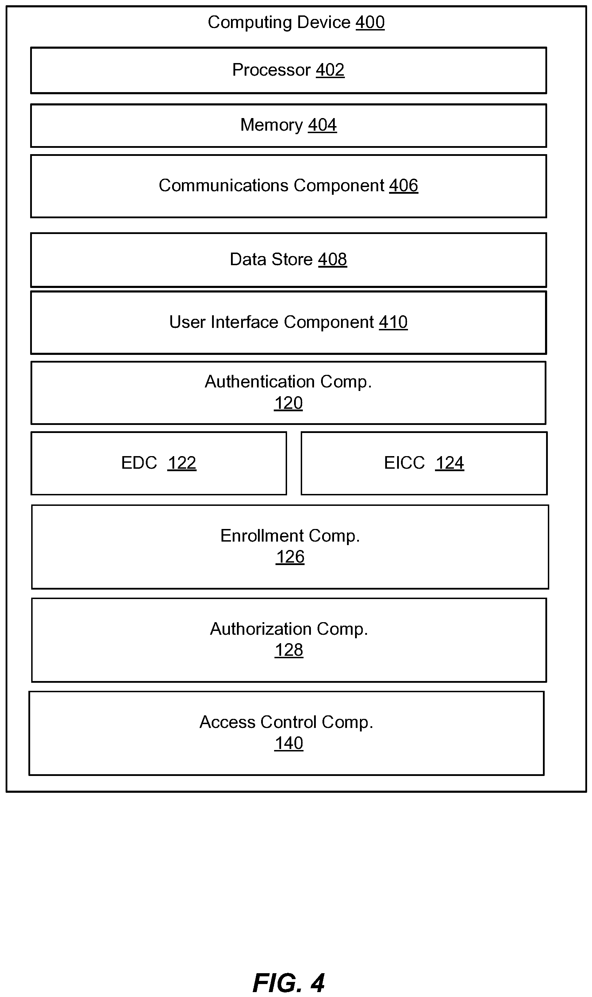

Referring to FIG. 4, a computing device 400 may implement all or a portion of the functionality described herein. The computing device 400 may be or may include or may be configured to implement the functionality of at least a portion of the event monitoring system 100, or any component therein. For example, the computing device 400 may be or may include or may be configured to implement the authentication component 120, the enrollment detection component 122, the enrollment information collection component 124, the enrollment component 126, the authorization component 128, and the access control component 130. The computing device 400 includes a processor 402 which may be configured to execute or implement software, hardware, and/or firmware modules that perform any functionality described herein. For example, the processor 402 may be configured to execute or implement software, hardware, and/or firmware modules that perform any functionality described herein with reference to the authentication component 120, the enrollment detection component 122, the enrollment information collection component 124, the enrollment component 126, the authorization component 128, and the access control component 130, or any other component/system/device described herein.

The processor 402 may be a micro-controller, an application-specific integrated circuit (ASIC), a digital signal processor (DSP), or a field-programmable gate array (FPGA), and/or may include a single or multiple set of processors or multi-core processors. Moreover, the processor 402 may be implemented as an integrated processing system and/or a distributed processing system. The computing device 400 may further include a memory 404, such as for storing local versions of applications being executed by the processor 402, related instructions, parameters, etc. The memory 404 may include a type of memory usable by a computer, such as random-access memory (RAM), read only memory (ROM), tapes, magnetic discs, optical discs, volatile memory, non-volatile memory, and any combination thereof. Additionally, the processor 402 and the memory 404 may include and execute an operating system executing on the processor 402, one or more applications, display drivers, etc., and/or other components of the computing device 400.

Further, the computing device 400 may include a communications component 406 that provides for establishing and maintaining communications with one or more other devices, parties, entities, etc. utilizing hardware, software, and services. The communications component 406 may carry communications between components on the computing device 400, as well as between the computing device 400 and external devices, such as devices located across a communications network and/or devices serially or locally connected to the computing device 400. In an aspect, for example, the communications component 406 may include one or more buses, and may further include transmit chain components and receive chain components associated with a wireless or wired transmitter and receiver, respectively, operable for interfacing with external devices.

Additionally, the computing device 400 may include a data store 408, which can be any suitable combination of hardware and/or software, that provides for mass storage of information, databases, and programs. For example, the data store 408 may be or may include a data repository for applications and/or related parameters not currently being executed by processor 402. In addition, the data store 408 may be a data repository for an operating system, application, display driver, etc., executing on the processor 402, and/or one or more other components of the computing device 400.

The computing device 400 may also include a user interface component 410 operable to receive inputs from a user of the computing device 400 and further operable to generate outputs for presentation to the user (e.g., via a display interface to a display device). The user interface component 410 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 410 may include one or more output devices, including but not limited to a display interface, a speaker, a haptic feedback mechanism, a printer, any other mechanism capable of presenting an output to a user, or any combination thereof.

The following examples are illustrative only and may be combined with aspects of other embodiments or teachings described herein, without limitation. Any of these embodiments can be claimed in a separate claim, e.g. by substituting the word "clause" by "claim", in particular in the order as mentioned below and/or in any combination with any embodiment described above or with any of the features of the attached claims:
Clause 1. A method comprising: receiving, at a first public key as a credential (PKAAC) access control reader with enrollment capabilities, a PKAAC authentication request from a PKAAC-enabled client application of a client device; determining that the PKAAC authentication request corresponds to an identity that is unenrolled; collecting pre-enrollment information in response to the PKAAC authentication request corresponding to the identity that is unenrolled; generating enrollment information based upon the pre-enrollment information, the enrollment information including authorization information indicating that the identity is authorized to access an access point; and providing, via a second PKAAC access control reader, access to the access point based on the authorization information.
Clause 2. The method of clause 1, wherein receiving the PKAAC authentication request comprises receiving the authentication request including a PKAAC credential corresponding to a public key generated by the client device.
Clause 3. The method of any preceding clauses, wherein the enrollment information is first enrollment information, and determining that the PKAAC authentication request corresponds to the identity that is unenrolled, comprising comparing a PKAAC credential of the authentication request to second enrollment information generated before the first enrollment information.
Clause 4. The method of any preceding clauses, wherein collecting the pre-enrollment information comprises: receiving the pre-enrollment information via the PKAAC-enabled client application of the client device.
Clause 5. The method of any preceding clauses, wherein generating enrollment information based upon the pre-enrollment information comprises: transmitting a confirmation request to one or more confirmation devices associated with the pre-enrollment information; receiving, from the one or more confirmation devices, one or more confirmation responses confirming the pre-enrollment information; and generating the enrollment information based at least in part on the one or more confirmation responses confirming the pre-enrollment information.
Clause 6. The method of any preceding clauses, wherein generating enrollment information based upon the pre-enrollment information comprises: verifying the pre-enrollment information received from the client device; and generating the enrollment information based at least in part on the verifying.
Clause 7. The method of any preceding clauses, wherein the pre-enrollment information identifies at least one of a particular physical location associated with the access point, a host and/or event associated with the access point, and/or an intended use associated with the access point.
Clause 8. A system comprising: a memory storing instructions thereon; and at least one processor coupled to the memory and configured by the instructions to: receive, at a first PKAAC access control reader with enrollment capabilities, a PKAAC authentication request from a PKAAC-enabled client application of a client device; determine that the PKAAC authentication request corresponds to an identity that is unenrolled; collect pre-enrollment information in response to the PKAAC authentication request corresponding to the identity that is unenrolled; generate enrollment information based upon the pre-enrollment information, the enrollment information including authorization information indicating that the identity is authorized to access an access point; and provide, via a second PKAAC access control reader, access to the access point based on the authorization information.
Clause 9. The system of clause 8, wherein to receive the PKAAC authentication request, the processor is further configured to: receive the authentication request including a PKAAC credential corresponding to a public key generated by the client device.
Clause 10. The system of any preceding clauses, wherein the enrollment information is first enrollment information, and to determine that the PKAAC authentication request corresponds to the identity that is unenrolled, the processor is further configured to compare a PKAAC credential of the authentication request to second enrollment information generated before the first enrollment information.
Clause 11. The system of any preceding clauses, wherein to collect the pre-enrollment information, the processor is further configured to: receive the pre-enrollment information via the PKAAC-enabled client application of the client device.
Clause 12. The system of any preceding clauses, wherein to generate enrollment information based upon the pre-enrollment information, the processor is further configured to: transmit a confirmation request to one or more confirmation devices associated with the pre-enrollment information; receive, from the one or more confirmation devices, one or more confirmation responses confirming the pre-enrollment information; and generate the enrollment information based at least in part on the one or more confirmation responses confirming the pre-enrollment information.
Clause 13. The system of any preceding clauses, wherein to generate enrollment information based upon the pre-enrollment information, the processor is further configured to: verify the pre-enrollment information received from the client device; and generate the enrollment information based at least in part on the verifying.
Clause 14. The system of any preceding clauses, wherein the pre-enrollment information identifies at least one of a particular physical location associated with the access point, a host and/or event associated with the access point, and/or an intended use associated with the access point.
Clause 15. A non-transitory computer-readable device having instructions thereon that, when executed by at least one computing device, causes the at least one computing device to perform operations comprising: receiving, at a first PKAAC access control reader with enrollment capabilities, a PKAAC authentication request from a PKAAC-enabled client application of a client device; determining that the PKAAC authentication request corresponds to an identity that is unenrolled; collecting pre-enrollment information in response to the PKAAC authentication request corresponding to the identity that is unenrolled; generating enrollment information based upon the pre-enrollment information, the enrollment information including authorization information indicating that the identity is authorized to access an access point; and providing, via a second PKAAC access control reader, access to the access point based on the authorization information.
Clause 16. The non-transitory computer-readable device of clause 15, wherein receiving the PKAAC authentication request comprises receiving the authentication request including a PKAAC credential corresponding to a public key generated by the client device.
Clause 17. The non-transitory computer-readable device of any preceding clauses, wherein the enrollment information is first enrollment information, and determining that the PKAAC authentication request corresponds to the identity that is unenrolled, comprising comparing a PKAAC credential of the authentication request to second enrollment information generated before the first enrollment information.
Clause 18. The non-transitory computer-readable device of any preceding clauses, wherein collecting the pre-enrollment information comprises: receiving the pre-enrollment information via the PKAAC-enabled client application of the client device.
Clause 19. The non-transitory computer-readable device of any preceding clauses, wherein generating enrollment information based upon the pre-enrollment information comprises: transmitting a confirmation request to one or more confirmation devices associated with the pre-enrollment information; receiving, from the one or more confirmation devices, one or more confirmation responses confirming the pre-enrollment information; and generating the enrollment information based at least in part on the one or more confirmation responses confirming the pre-enrollment information.
Clause 20. The non-transitory computer-readable device of any preceding clauses, wherein generating enrollment information based upon the pre-enrollment information comprises: verifying the pre-enrollment information received from the client device; and generating the enrollment information based at least in part on the verifying.
Clause 21. The non-transitory computer-readable device of any preceding clauses, wherein the pre-enrollment information identifies at least one of a particular physical location associated with the access point, a host and/or event associated with the access point, and/or an intended use associated with the access point.
Clause 22. A computer-readable device having instructions thereon that, when executed by at least one computing device, causes the at least one computing device to perform operations comprising the method of any of any preceding clauses.
Clause 23 One or more computer-readable non-transitory storage media embodying software that is operable when executed to perform a method of any preceding clauses.
Claus 24. A system comprising: one or more processors; and at least one memory coupled to the processors and comprising instructions executable by the processors, the processors operable when executing the instructions to perform a method of any preceding clauses.
Clause 26. A computer program product, preferably comprising a computer-readable non-transitory storage media, that is operable when executed on a data processing system to perform a method of any preceding clauses.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method comprising:
receiving, at a first public key as a credential (PKAAC) access control reader with enrollment capabilities, a PKAAC authentication request from a PKAAC-enabled client application of a client device;
determining that the PKAAC authentication request corresponds to an identity that is unenrolled;
collecting pre-enrollment information in response to the PKAAC authentication request corresponding to the identity that is unenrolled;
generating enrollment information based upon the pre-enrollment information, the enrollment information including authorization information indicating that the identity is authorized to access an access point; and
providing, via a second PKAAC access control reader, access to the access point based on the authorization information.

2. The method of claim 1, wherein receiving the PKAAC authentication request comprises receiving the authentication request including a PKAAC credential corresponding to a public key generated by the client device.

3. The method of claim 1 or 2, wherein the enrollment information is first enrollment information, and determining that the PKAAC authentication request corresponds to the identity that is unenrolled, comprising comparing a PKAAC credential of the authentication request to second enrollment information generated before the first enrollment information.

4. The method of any of claims 1 to 3, wherein collecting the pre-enrollment information comprises:
receiving the pre-enrollment information via the PKAAC-enabled client application of the client device.

5. The method of any of claims 1 to 4, wherein generating enrollment information based upon the pre-enrollment information comprises:
transmitting a confirmation request to one or more confirmation devices associated with the pre-enrollment information;
receiving, from the one or more confirmation devices, one or more confirmation responses confirming the pre-enrollment information; and
generating the enrollment information based at least in part on the one or more confirmation responses confirming the pre-enrollment information.

6. The method of any of claims 1 to 5, wherein generating enrollment information based upon the pre-enrollment information comprises:
verifying the pre-enrollment information received from the client device; and
generating the enrollment information based at least in part on the verifying.

7. The method of any of claims 1 to 6, wherein the pre-enrollment information identifies at least one of a particular physical location associated with the access point, a host and/or event associated with the access point, and/or an intended use associated with the access point.

8. A system comprising:
a memory storing instructions thereon; and
at least one processor coupled to the memory and configured by the instructions to:
receive, at a first PKAAC access control reader with enrollment capabilities,
a PKAAC authentication request from a PKAAC-enabled client application of a client device;
determine that the PKAAC authentication request corresponds to an identity that is unenrolled;
collect pre-enrollment information in response to the PKAAC authentication request corresponding to the identity that is unenrolled;
generate enrollment information based upon the pre-enrollment information, the enrollment information including authorization information indicating that the identity is authorized to access an access point; and
provide, via a second PKAAC access control reader, access to the access point based on the authorization information.

9. The system of claim 8, wherein to receive the PKAAC authentication request, the processor is further configured to: receive the authentication request including a PKAAC credential corresponding to a public key generated by the client device.

10. The system of claim 8 or 9, wherein the enrollment information is first enrollment information, and to determine that the PKAAC authentication request corresponds to the identity that is unenrolled, the processor is further configured to compare a PKAAC credential of the authentication request to second enrollment information generated before the first enrollment information.

11. The system of any of claims 8 to 10, wherein to collect the pre-enrollment information, the processor is further configured to: receive the pre-enrollment information via the PKAAC-enabled client application of the client device.

12. The system of any of claims 8 to 11, wherein to generate enrollment information based upon the pre-enrollment information, the processor is further configured to:
transmit a confirmation request to one or more confirmation devices associated with the pre-enrollment information;
receive, from the one or more confirmation devices, one or more confirmation responses confirming the pre-enrollment information; and
generate the enrollment information based at least in part on the one or more confirmation responses confirming the pre-enrollment information.

13. The system of any of claims 8 to 12, wherein to generate enrollment information based upon the pre-enrollment information, the processor is further configured to:
verify the pre-enrollment information received from the client device; and
generate the enrollment information based at least in part on the verifying.

14. The system of any of claims 8 to 13, wherein the pre-enrollment information identifies at least one of a particular physical location associated with the access point, a host and/or event associated with the access point, and/or an intended use associated with the access point.

15. A computer-readable device having instructions thereon that, when executed by at least one computing device, causes the at least one computing device to perform operations comprising the method of any of claims 1 to 7.
